# EUROPEAN PATENT APPLICATION

(11) **EP 3 438 918 A1**
(43) Date of publication of application: **06.02.2019**
(21) Application number: 17184388.1
(22) Date of filing: 02.08.2017
(51) Int. Cl.: G06T 1/00

(54) **DISPLAY OF A MEDICAL IMAGE**

(71) Applicant: Koninklijke Philips N.V., 5656 AE Eindhoven (NL)
(72) Inventor: BYSTROV, Daniel, 5656 AE Eindhoven (NL); VIK, Torbjørn, 5656 AE Eindhoven (NL); FRANZ, Astrid Ruth, 5656 AE Eindhoven (NL); SCHULZ, Heinrich, 5656 AE Eindhoven (NL); SCHADEWALDT, Nicole, 5656 AE Eindhoven (NL)
(74) Representative: de Haan, Poul Erik

(57) **Abstract**

Presented are concepts for displaying medical images. One such concept generates transformation data by mapping image data of a medical image to a location in an anatomical atlas and by determining a transfer function for transforming image data of the medical image for display. The transfer function is then associated with the location in the anatomical atlas. A medical image can then be displayed by identifying a transfer function associated with a selected location in the anatomical atlas. The identified transfer function is applied to image data of a medical image that is mapped to the selected location in the anatomical atlas so as to obtain transformed image data. A transformed version of the medical image is then displayed based on the transformed image data.

## Description

### FIELD OF THE INVENTION

This invention relates to medical images and more particularly to displaying a medical image.

### BACKGROUND OF THE INVENTION

The increasing number of medical image acquisition techniques inevitably results in an increasing number of visualisation methods and requirements that need to be catered for. However, important considerations for viewing and interpreting medical images include reproducibility and uniformity across various medical images. Such considerations may be complex and/or difficult to address where the various medical images have been obtained using different techniques, equipment and/or data capture parameters for example.

For example, for viewing and assessing lung diseases in Computed Tomography (CT) images, the image data may be displayed using certain viewing or visualisation parameters that transform Hounsfield Unit (HU) values of the CT image data to grey values for a display device. Viewing and assessment of bone tissue may, however, use other viewing or visualisation parameters that transform the image data in a different manner.

Since these viewing or visualisation parameters are disjointed, it is common to combine them together and represent them using a single/global (but slightly more complex) transfer function. For instance, such a transfer function may be dependent on a clinical context and/or underlying physical measurements (e.g. scalar HU values, multidimensional MRI data (T1, T2, fat-water separated images), or aligned PET/CT or MRI/CT data). By displaying medical images using such transfer functions, a viewer (e.g. a medical professional, clinician or technician) may relate the displayed medical image data images to medical knowledge of normal and abnormal/malignant anatomical structures.

Nonetheless, the interpretation of medical images may remain problematic, especially since it is difficult to standardise transfer functions across multiple medical images that have been obtained using different techniques, equipment and/or data capture parameters. Also, multiple anatomical structures may be overlapping in a single medical image (such as an X-ray) of a part of a human or animal body.

Furthermore, even for CT images, where standard transfer functions are widely used, the selection of a certain specific transfer function might cause certain abnormalities to not be visible and thus prevent possible side-findings from being identified (e.g. a liver tumour may be invisible when using dedicated lung tissue viewing or visualisation parameters).

### SUMMARY OF THE INVENTION

Some embodiments of the invention aims to at least partly fulfil one of the aforementioned needs. To this end, some embodiments of the invention provide methods, computer program products and systems as defined in the independent claims. The dependent claims provide advantageous embodiments. Some embodiments of the invention provide a method of, and corresponding system for, generating transformation data for displaying a medical image. The method comprises: mapping image data of a first medical image relating to a part of a human or animal body to a first location in an anatomical atlas, the anatomical atlas being representative of the relative locations of anatomical features of a human or animal body; obtaining a first transfer function for transforming image data of the first medical image for display; and associating the transfer function with the first location in the anatomical atlas.

Proposed embodiments are based on a concept of mapping medical images to an atlas reference space (e.g. an anatomical atlas representative of the relative locations of anatomical features of a human or animal body) and associating transfer functions with locations in the atlas reference space. In this way, the atlas reference space may be supplemented with information for transforming image data for display which is dependent on location within the atlas reference space. For instance, prior knowledge regarding an optimal viewing or visualisation parameter for image data relating to a particular anatomical feature may be associated with a location in the atlas reference space which corresponds to the anatomical feature. The information regarding the optimal viewing or visualisation parameter(s) may then be retrieved and employed for medical image data that is mapped to that location in the atlas reference space.

By associating transfer functions with locations in the reference space, embodiments may be thought of as providing a reference space that has spatially varying transfer function associated with it (wherein the spatially varying transfer function may be a single, global transfer function which is representative of the various transfer functions associated with various locations in the reference space). In this way, the spatially varying transfer function may represent combined knowledge regarding preferred or optimal image data transformations for viewing or visualising various medical images.

Proposed embodiments may therefore enable automatic selection of a transfer function based on a location in an anatomical atlas. For instance, based on a selected medical image and the location to which the selected medical image is mapped in an anatomical atlas, a transfer function associated with the location in the anatomical atlas can be identified. The identified transfer function may then be used to transform image data of the medical image so that the image data is displayed according to particular viewing or visualisation parameters (as defined by the transfer function). Selection of a different location in the anatomical atlas (e.g. to select medical data relating to a second, different anatomical feature) may select a different transfer function which can then be used to transform image data of the same (or a different) medical image so that the image data is displayed according to different viewing or visualisation parameters (which may, for example, be preferred or optimal for investigating the second anatomical feature).

Thus, by referencing an anatomical atlas that is associated with supplementary information relating to transfer functions according to proposed concepts, embodiments may enable the automatic selection of a transfer function for transforming medical image data for the purpose of visualisation or display.

Embodiments may therefore enable the provision of a supplemented or augmented anatomical atlas to which medical images are mapped and which has transfer functions associated with various locations in the anatomical atlas. In this way, information regarding viewing or visualisation parameters for medical images may be combined with a reference space (e.g. an anatomical atlas). Based on a position in the reference space, viewing or visualisation parameters may be automatically selected. Embodiments may therefore be used to display a medical image to a user in accordance with preferred or optimal visualisation parameters without requiring detailed and/or complex user interaction.

In addition to proposing the generation or creation of a supplemented or augmented anatomical atlas, embodiments may also propose the use of such an atlas for the purpose of displaying medical images according to preferred or optimal visualisation parameters specified by the atlas. Thus, a first aspect of concepts proposed herein may relate to the generation of information to supplement a conventional anatomical atlas with (e.g. to provide a supplemented or augmented anatomical atlas). A second aspect of concepts proposed herein may, however, relate to the use of an obtained supplemented/augmented anatomical atlas (e.g. previously generated by a third party or supplied by an independent source/supplier entity) in order to display or visualise a medical image according to visualisation parameters specified by the atlas.

Graphical depiction of medical image data using preferred or optimal visualisation parameters may enable a user to more-easily investigate or assess medical images. Proposed concepts may thus increase the clinical value of medical images by enabling such images to be provided (e.g. displayed or graphically represented) in a manner which accounts for analysis preferences or requirements. This may support assessment, enable improved focus on a diagnosis, and/or support clinical planning. Improved Clinical Decision Support (CDS) may therefore be provided by proposed concepts. Also, proposed embodiments may support visual navigation through clinical information with respect to graphical representations of captured clinical data (e.g. medical images).

Some embodiments may further comprise: mapping image data of a second medical image relating to a part of a human or animal body to a second location in the anatomical atlas; obtaining a second transfer function for transforming image data of the second medical image for display; and associating the second transfer function with the second location in the anatomical atlas. Such embodiments may cater for multiple medical images being mapped to a single reference atlas. Transfer functions for transforming image data of each medical image may be associated with locations in the reference atlas to which the medical images are mapped. A shared or common reference atlas may thus be supplemented with multiple medical images and associated transfer functions so as to provide an enhanced or augmented reference atlas that facilitates automatic selection of an appropriate transfer function (e.g. based on a selected location in the reference atlas).

Further, some embodiments may further comprise the steps of: determining a global transfer function for transforming image data of the first and second medical image based on the first and second transfer functions; and associating the global transfer function with the anatomical atlas. In this way an enhanced or augmented reference atlas may be provided which is supplemented (or associated) with a single, location-dependent (e.g. spatially-varying) transfer function. This single, global transfer function may provide a tool that can be referenced against the anatomical atlas so as to determine how medical image data should be transformed for display purposes.

Mapping image data of the first medical image may comprise: identifying a first anatomical feature in the first medical image; and determining a mapping function for mapping the image data of the first medical image to the anatomical atlas based on the identified first anatomical feature and its position in the first medical image. Also, some embodiments may further comprise: identifying a second anatomical feature in the first medical image. The step of determining a mapping function for mapping the image data of the first medical image to the anatomical atlas may then be further based on the identified second anatomical feature and its position in the first medical image. The process of mapping medical images to an anatomical atlas may thus be based on identified anatomical features that are present in the medical images. This may facilitate automatic execution/completion of the mapping (e.g. without requiring additional information about the content of the medical images to be provided). User input and/or involvement may thus be reduced by proposed embodiments.

Also, determining the mapping function may comprise interpolating based on the relative locations of the first and second anatomical features. Such an approach may enable a space-filling mapping to be determined based only on a limited number of anatomical features (e.g. anatomical landmarks) being identified. Image data at all locations in a medical image may therefore be mapped to an anatomical axis using reduced or minimal computation/resources.

In an embodiment, the first transfer function may be adapted to modify a visualization parameter of image data. For example, the visualization parameter may comprise at least one of: a colour value; a viewing location or angle; a HU value; a contrast value; a transparency value; a brightness value; and a saturation value. Selection of one or more viewing parameters may be facilitated by a transfer function.

According to an aspect of the invention, there is provided a method for displaying a medical image. The method comprises: obtaining transformation data comprising: an anatomical atlas representative of the relative locations of anatomical features of a human or animal body; and a plurality of transfer functions associated with respective locations in the anatomical atlas; identifying a transfer function associated with a selected location in the anatomical atlas; applying the identified transfer function to image data of a medical image that is mapped to the selected location in the anatomical atlas so as to obtain transformed image data; and displaying a transformed version of the medical image based on the transformed image data.

Embodiments may enable medical images to be displayed using optimal visualisation parameters as defined by the transformation data, thus helping to ensure that relevant details are shown or made easily identifiable. This may, for example, enable a user to quickly and easily assess medical images with improved accuracy. In some embodiments the transformation data may be obtained by generating transformation data according to a proposed embodiment. However, in other embodiments, the transformation data may be obtained from a third party, independent entity, user input or other supplier (rather than being generated internally for example).

Predetermined information regarding optimal visualisation parameters for each of a plurality of medical images obtained from different sources and/or using different methodologies may be encoded or associated with locations within an anatomical atlas. Such optimal visualisation parameters may then be automatically identified (e.g. according to a selected location in the anatomical atlas) for enabling optimized display and assessment of a medical image.

In an embodiment, the step of identifying a transfer function may be further based on at least one of: an indication of a medical image source; an indication of a medical image of interest; and an indication of user preference. For instance, further information regarding a medical image and/or visualisation preference may be employed so as to select an appropriate transfer function. This may cater for situations where multiple medical images are mapped to the same location in an anatomical atlas for example.
Embodiments may enable a medical image to be displayed in such a manner that a user can quickly and easily infer clinical information from a medical image without requiring the user to spend time and effort adjusting visualisation parameter. This may enable a viewer to easily identify and assess features in medical images whilst reducing an amount of user input or configuration knowledge.

Proposed embodiments may further comprise generating instructions for displaying transformed medical image data on a display device using a processor device. Generating instructions for display of transformed image data can mean generating a control signal for use by a display device. Such instructions can be in the form of simple images such as bitmap JPEG or other format. However, such instructions can also be more complex allowing real time build-up of the transformed image data or parts of the medical image on a regular display device such as for example CRT, LCD, OLED, E-ink or the like.

According to another aspect, there may be provided a computer program product downloadable from a communications network and/or stored on a computer readable medium and/or microprocessor-executable medium wherein the computer program product comprises computer program code instructions, which when executed by at least one processor, implement a method according to a proposed embodiment.

According to another aspect, there may be provided a system for generating transformation data for displaying a medical image. The system may comprise at least one processor and a computer program product according to a proposed embodiment.

The system may further comprise a display device for displaying transformed image data of a medical image.

In an embodiment, the system may comprise: a server device having the at least one processor; and a client device comprising the display device. The server device may be configured to generate instructions for displaying the transformed medical image data on a display device and to transmit the generated instructions for displaying the transformed image data to the client device, and the client device may be configured to receive the generated instructions for display of the transformed image data and to use the instructions to display the transformed image data of a medical image.

In another embodiment, the system may comprise a client device comprising the data processor device and the display device. This may be a standalone device receiving medical image data, storing medical image data and/or even further configured to access medical image data if the processor is configured for that. In other words, a user (such as a medical professional, technician, researcher, etc.) may have an appropriately arranged client device (such as a laptop, tablet computer, mobile phone, PDA, etc.) which provides transformed medical image data according to an embodiment and thus enables the user to view medical images with optimised visualisation parameters for the purpose of medial assessment or analysis.

The independent claims define analogous features for method, system and apparatus claims. The advantages explained for embodiments of the method herein above and herein below may therefore also apply to the corresponding systems and apparatus.

The system may comprise: a server device comprising the at least one processor, where the server device may be configured to transmit generated instructions for display of the transformed image data of a medical image to a client device or communication network. In such a configuration, display instructions are made available by a server. A user may therefore link with the server to work with the transformed image data.

The processor may be remotely located from the display device, and a control signal may thus be communicated to the display device via a communication link. Such a communication link can be e.g. the internet and/or a wireless communication link. Other suitable short-range or long-range communication links and/protocols may be employed. In this way, a user (such as a medical researcher, data analyst, engineer, etc.) may have an appropriately arranged display device that can receive and display transformed image data of a medical image according to an embodiment. Embodiments may therefore enable a user to remotely view transformed image data of a medical image using a portable display device, such as a laptop, tablet computer, mobile phone, PDA, etc.

The system may further comprise: a server device comprising the at least one processor; and a client device comprising a display device. Dedicated data processing means may therefore be employed for the purpose of generating transformation data for displaying a medical image, thus reducing processing requirements or capabilities of other components or devices of the system.

Thus, it will be understood that processing capabilities may therefore be distributed throughout the system in different ways according to predetermined constraints and/or availability of processing resources.

According to another aspect of the invention, there is provided apparatus for generating transformation data for displaying a medical image. The apparatus comprises: an image mapping module adapted to map image data of a first medical image relating to a part of a human or animal body to a first location in an anatomical atlas, the anatomical atlas being representative of the relative locations of anatomical features of a human or animal body; and a data processing module adapted to obtain a first transfer function for transforming image data of the first medical image for display and to associate the transfer function with the first location in the anatomical atlas.

According to yet another aspect of the invention, there is provided apparatus for displaying a medical image comprising: an input interface adapted to obtain transformation data comprising: an anatomical atlas representative of the relative locations of anatomical features of a human or animal body; and a plurality of transfer functions associated with respective locations in the anatomical atlas; a selection module adapted to identify a transfer function associated with a selected location in the anatomical atlas; a data transformation module adapted to apply the identified transfer function to image data of a medical image that is mapped to the selected location in the anatomical atlas so as to obtain transformed image data; and a display device adapted to display a transformed version of the medical image based on the transformed image data.

These and other aspects of the invention will be apparent from and elucidated with reference to the embodiment(s) described hereinafter.

### BRIEF DESCRIPTION OF THE DRAWINGS

Some embodiment of the invention will now be described in detail with reference to the following schematic drawings:
Fig. 1 is a schematic block diagram of apparatus for displaying a medical image according to an embodiment;
Fig. 2 illustrates an augmented anatomical atlas according to an embodiment;
Fig. 3 is a diagram of a distributed system for displaying medical images according to an embodiment;
Fig. 4 shows a flow diagram of a method according to an embodiment; and
Fig. 5 is a block diagram of a computer (such as server device and/or client device) within which one or more parts of embodiments of the invention can be implemented.

### DETAILED DESCRIPTION OF THE EMBODIMENTS

Proposed embodiments relate to generating transformation data for displaying a medical image using optimal or preferred visualisation parameters/settings. Medical images may be mapped to an anatomical atlas (e.g. a representation of relative locations of anatomical features of a human or animal body) and transfer functions (for transforming image data for display according to optimal or preferred visualization parameters) may be associated with locations in the anatomical atlas. In this way, the anatomical atlas may be supplemented with information for transforming medical image data for display, wherein the information is dependent on location within the atlas reference space.

Some embodiments of the invention may therefore be utilized in conjunction with medical images obtained using different methodologies and/or data capture settings. Embodiments may enable automatic selection of a transfer function (for transforming medical image data for display) based on a selected location in an anatomical atlas. The automatically selected transfer function may then be used to transform image data of a medical image so that the image data can be displayed according to particular viewing or visualisation parameters. Thus, by referencing an anatomical atlas that is associated with supplementary information relating to transfer functions according to proposed concepts, some embodiments may enable the automatic transformation of medical image data for optimised display to a viewer.

Embodiments may therefore provide an approach to forming an augmented anatomical atlas, thereby enabling the automatic provision of transformed medical image data for display using optimised visualisation parameters. Automatic and dynamic transformation of medical image data for optimised display may therefore be provided by proposed embodiments.

In particular, embodiments of the present invention are directed toward enabling a user to simply select a medical image mapped to a location in a reference atlas so that the selected medical image can then be displayed in an optimal manner (e.g. using preferred or optimised visualisation parameters). This may enable a user to quickly and easily view multiple medical images with the images being displayed using optimal display settings.

As a result, proposed embodiments may be of benefit in any medical image display system, especially where multiple medical images obtained using different sources or methodologies may need to be displayed to a user. A proposed example enables usage by researchers in a medical field to visually analyse medical images of a subject obtained using different equipment in an effort to facilitate medical diagnosis. Embodiments may therefore be of particular benefit for systems utilising multiple medical images for an individual subject, especially for the purpose of clinical analysis via visualisation.

The following description provides a context for the description of elements and functionality of some embodiment of the invention and of how elements of the embodiments can be implemented.

In the description, the following terms and definitions are used.

An anatomical atlas is a reference space representative of relative locations of anatomical features of a human or animal body. It may provide a graphical representation of a human or animal body wherein locations, sizes and shapes of anatomical features are identified and depicted as graphical icons and/or visual indicators (e.g. much like a simplified or schematic map of a human or animal body).

A display device is an electronic display device that can be controlled by a display control device. The display control device can be part of, or operate together with, a processor device.

Generating instructions for displaying medical image data can comprise (or be as simple as) constructing images (Bitmap, JPEG, Tiff or the like) of medical image data to be displayed on a display device using regular methods known in the art. Alternatively, such generation of instructions can comprise more dedicated instructions for real time build-up of a medical image view. The instructions can be in the form of a display control signal.

Some embodiments of the invention are at least partly based on the insight that a medical image and a transfer function for transforming image data of the medical image for display may be associated with a location in an anatomical atlas. Selection of the location in the anatomical atlas may then be used to identify that the transfer function associated with location should be used for the medical image mapped to the same location.

In particular, relative placement of medical images in a (virtual) reference space (e.g. anatomical atlas) can be combined with a transfer function associated with the same location in the (virtual) reference space. In other words, transformation of image data for display may be made dependent on location in reference space (such as an anatomical atlas). Selection of a location in the reference space may then be used to define how medical image data should be transformed for display in an optimal manner (e.g. according to predetermined visualisation or display parameters).

A visualization parameter of medical image data which a transfer function is adapted to modify can, for example, be chosen from the group of: a colour value; a viewing location or angle; a HU value; a contrast value; a transparency value; a brightness value; and a saturation value.

A transfer function associated within a location in the reference space may be predefined or can be user-defined. For the latter purpose, some embodiment of the invention may employ a step where a user is enabled to provide a transfer function definition input using a user input device. A user input device can be one or more of the following: a keyboard, mouse or other screen pointer device, touch sensitive display screen, speech recognition device or any other means known in the art.

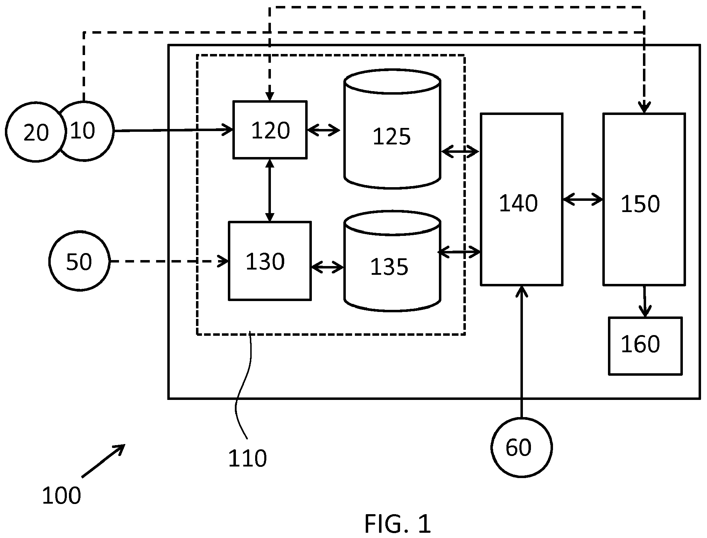

Referring to Figure 1 there is depicted a schematic block diagram of apparatus 100 for displaying a medical image 10 according to an embodiment. In this regard, it is noted that the depicted embodiment includes apparatus 110 for generating transformation data according to a proposed embodiment (wherein such apparatus 110 for generating transformation data is indicated by a dashed-line box).

The apparatus 110 for generating transformation data comprises an image mapping module 120 adapted to map image data of a first medical image 10 relating to a part of a human or animal body to a first location in an anatomical atlas. In this example, the image mapping module is adapted to map image data of the first medical image 10 by identifying a first anatomical feature in the first medical image 10. Based on the identified first anatomical feature and its position in the first medical image 10, the image mapping module 120 determines a mapping function for mapping the image data of the first medical image 10 to the anatomical atlas.

Although the depicted image mapping module 120 of Figure 1 is adapted to determine a mapping function based on the identification of a single anatomical feature in the first medical image 10, other embodiments the image mapping module 120 may use the presence of further anatomical features in the first medical image 10 to determine a mapping function. For instance, the image mapping module 120 of another embodiment may be adapted to identify a second anatomical feature in the first medical image 10. Based on the identified second anatomical feature and its position in the first medical image 10, the image mapping module may then determine a mapping function for mapping the image data of the first medical image 10 to the anatomical atlas. Also, the image mapping module 120 of such an embodiment may employ interpolation based on the relative locations of the identified first and second anatomical features, thereby determining a mapping function for mapping all items (e.g. pixels, segments, portions, etc.) of image data to the anatomical atlas whilst reducing a required amount of processing/calculation resource.

In the example of Figure 1, the image mapping module 120 is adapted to store the determined mapping function in a mapping database 125.

The apparatus 110 for generating transformation data also comprises a data processing module 130 adapted to determine a first transfer function for transforming image data of the first medical image 10 and to associate the transfer function with the first location in the anatomical atlas. The first transfer function determined by the data processing module 130 is adapted to modify a visualization parameter of image data according to a predetermined preference or optimised setting for visualisation of the first medical image 10. For this purpose, the data processing module 130 is adapted to receive an input signal 50 comprising information relating to a preferred or optimal visualisation of the first medial image 10. The input signal 50 may, for example, be a user-provided input and/or a signal provided from a system/apparatus adapted to determine preferred or optimal visualisation information. The input signal 50 may therefore be based on historical information relating to previously displayed or visualised medical image data.

In particular, the first transfer function is adapted to modify a visualization parameter including at least one of: a colour value; a viewing location or angle; a HU value; a contrast value; a transparency value; a brightness value; and a saturation value. In this way, the first transfer function is adapted to transform medical image data to transformed data for display with preferred or optimal visualisation characteristics.

In the example of Figure 1, the data processing module 130 is adapted to store the determined first transfer function in a transfer database 135.

Although the embodiment of Figure 1 has been described above with respect to a first medical image 10, it will be appreciated that the features of the apparatus 110 for generating transformation data can be adapted to perform their respective functions with a plurality of medical images.

Thus, by way of example only, it is noted that that the image mapping module 120 can map image data of a second medical image 20 relating to a part of a human or animal body to a second location in the anatomical atlas. The data processing module 130 can then determine a second transfer function for transforming image data of the second medical image for display; and can also associate the second transfer function with the second location in the anatomical atlas. In such an example, the data processing module 130 is also adapted to determine a global transfer function for transforming image data of the first 10 and second 20 medical images based on the first and second transfer functions, and to then associate the global transfer function with the anatomical atlas.

From the above description of the apparatus 110 for generating transformation data, it will be understood the apparatus 100 for displaying a medical image may be thought of as comprises a module 110 that generates transformation data (e.g. mapping functions and transfer functions) that may be used to augment or supplement an anatomical atlas. The augmented/supplemented anatomical atlas can be used to identify a transfer function for transforming medical image data for display according to a preferred or optimised visualisation settings. Identification of the transfer function is based on a selected location of the augmented/supplemented anatomical atlas.

In particular, the example apparatus 100 for displaying a medical image as depicted in Figure 1 comprises a selection module 140 that is adapted to identify a transfer function (from the transfer database 125) that is associated with a selected location in the anatomical atlas. Here, the selection module 140 is adapted to identify a transfer function further based on received input signal 60 comprising information relating to at least one of: an indication of a medical image source; an indication of a medical image of interest; and an indication of user preference. In this way, the selection module 140 may receive and use further information regarding a medical image and/or visualisation preference so as to select an appropriate transfer function. Such usage of additional information provided via an input signal 60 can enable the selection module 140 to cater for situations where multiple medical images are mapped to the same location in an anatomical atlas for example.

The apparatus 100 for displaying a medical image as depicted in Figure 1 also comprises a data transformation module 150 adapted to apply the identified transfer function to image data of a medical image that is mapped to the selected location in the anatomical atlas so as to obtain transformed image data. For this purpose, the data transformation may obtain information regarding the medical image from the apparatus 110 for generating transformation data (e.g. from the image mapping module 120 and/or from the mapping database 125 (via the selection module)).

The apparatus 100 for display a medical image also comprises a display device 160 adapted to display a transformed version of the medical image based on the transformed image data.

From the above-described example in Figure 1, it will be understood that there is proposed a concept of associating visualization information (like transfer functions) with locations in an atlas coordinate system. Based on a location in the atlas coordinate system, a transfer function for transforming image data of a medical image mapped to the same location can be identified and then employed to alter visualization parameters for the medical image. This enables automatic combination of medical image information and visualisation knowledge in a process of displaying a medical image.

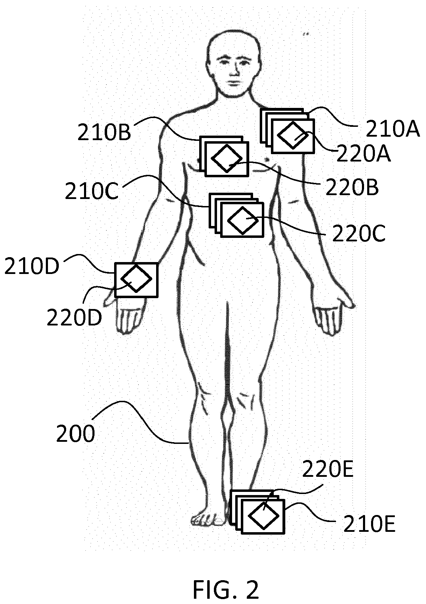

As depicted in Figure 2, there may be provided a single (e.g. master) anatomical atlas 200. The anatomical atlas 200 of Figure 2 comprises a representation of a human body and the relative locations of its anatomical features.

A plurality of medical images 210 are mapped to various locations in the anatomical atlas 200. In particular, each image is mapped to a region of the anatomical atlas comprising one or more anatomical features that the image relates to.

In the example depicted in Figure 2, a first set of medical images 210A is mapped to the position of the left shoulder in the anatomical atlas 200. This is because the first set of images comprise a CT scan, an X-ray and an MRI image of a subject's left shoulder. Further, a second set of medical images 210B is mapped to the position of the heart in the anatomical atlas 200, because the second set of images 210B comprise first and second MRI images of a subject's heart. A third set of medical images 210C is mapped to the position of the stomach in the anatomical atlas 200, because the third set of images 210C comprise first to third X-ray images of a subject's stomach region. A fourth medical image 210D is mapped to the position of the right wrist in the anatomical atlas 200, because the fourth image 201D comprises an X-ray images of a subject's right wrist. Finally, a fifth set of medical images 210E is mapped to the position of the left ankle in the anatomical atlas 200, because the fifth set of images 210E comprise first to third X-ray images of a subject's left ankle.

Accordingly, it will be appreciated that an aspect of a proposed embodiment may comprise mapping medical images to a reference anatomical atlas 200. For this purpose, a component of an embodiment can comprise an algorithm which detects anatomical positions (e.g. landmarks) within a medical image and then registers a medical image with a location in an anatomical atlas. In doing so, a space-filling mapping from the medical image to the anatomical atlas may be defined, and this mapping may be used to map all locations (e.g. voxels or pixels) of a medical image to respective locations of the anatomical atlas. The mapping can be a rigid, affine or non-linear mapping. Alternatively, embodiments can identify certain anatomical structures in a medical image and interpolate a space filling mapping from the image domain to the anatomical atlas.

Another aspect of a proposed embodiment may derive anatomy-dependent transfer functions for a given modality. For example, a mapping from medical image to the reference anatomical atlas, each image location x has not only the image value I(x) (e.g. HU value in a CT image) but also the position a(x) in the atlas space Rd (e.g. d = 2 or 3 depending on the dimension of the reference space). A transfer function T for transforming the image values to a display value based on a preferred or optimal visualisation setting can be defined (e.g. as a multi-dimensional mapping: T: (I(x), a(x)) → color (e.g. red, green, blue and transparency).

Such anatomy-dependent transfer functions can be derived, for example, by learning visualisation settings/parameters from different manually adjusted visualisation and averaging them. Furthermore, local transparency parameters can be easily encoded in the atlas space and utilized for 3D volume rendering. Another approach to defining a transfer function for transforming medical image data for display can be to determine viewing geometries and/or camera parameters.

Each transfer function can then be associated with location in the anatomical atlas to which a corresponding medical image has been mapped. For example, in the embodiment depicted in Figure 2, one or more transfer functions 220A for transforming the first set of medical images 210A are associated with the left shoulder region of the anatomical atlas 200. Similarly: a second transfer function 220B for transforming the second set of medical images 210B is associated with the heart region of the anatomical atlas 200; a third set of transfer functions 220C for transforming the third set of medical images 210C is associated with the stomach region of the anatomical atlas 200; a fourth transfer function 220D for transforming the fourth medical image 210D is associated with the right wrist of the anatomical atlas 200; and fifth transfer function 220E for transforming the fifth set of medical images 210E is associated with the left ankle region of the anatomical atlas 200.

Accordingly, it will be appreciated that a proposed embodiment such as that depicted in Figure 2 can be adapted to store transformation data for displaying medical image data in a single anatomical atlas, wherein the transformation data is associated with locations in the anatomical atlas. Appropriate transformation data (such as a single transfer function) for displaying a medical image with optimised visualisation parameter can then be automatically identified and employed based on a chosen/selected location in the anatomical atlas. In other words, proposed embodiments facilitate automatic selection of viewing parameters/setting depending on a location in an anatomical atlas.

Thus, by defining a combination of views/visualisation as well as transfer functions in an anatomical reference space, embodiments can be employed in medical image viewing workstations.

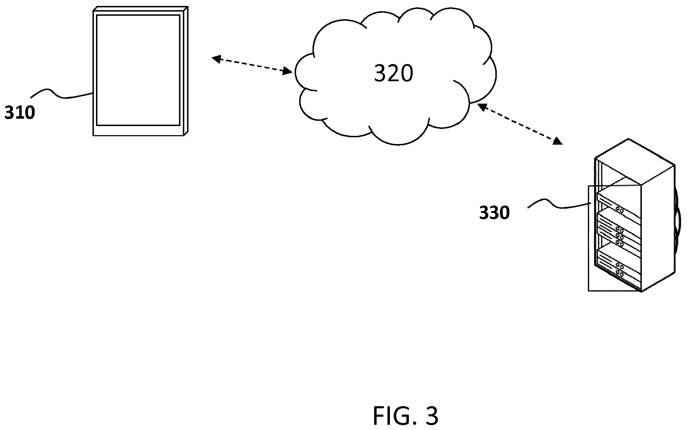

Referring now to Fig. 3, there is depicted a diagram of a distributed system for displaying medical images according to an embodiment;

A user input device 310 is arranged to receive user inputs from a user. In this example, the input device 310 is a mobile computing device (such as a tablet computer) having a touch sensitive user interface adapted to receive input commands/signals from a user. The mobile computing device 310 also comprises a display screen adapted to display transformed medical image data in accordance with embodiments of the proposed concepts, wherein user inputs (e.g. provided via the touch sensitive user interface) can control the displayed medical image.

Based on the received user inputs, the user input device 310 is adapted to display transformed image data of a selected medical image. For this purpose, the user input device 310 comprises a software application for processing, decrypting and/or interpreting received user input signals in order to determine a transfer function to apply to data of a medical image so that the medical image is displayed/visualised in a preferred or optimal manner. Thus, the user input device 310 comprises a processing arrangement adapted to determine, from a user input, a selected location in an anatomical atlas that is augmented with transformation data in accordance with proposed concepts.

The input device 310 is adapted to output signals representative of the user input commands/actions for an anatomical atlas and/or information relating to user selections or preferences (e.g. an indication of a medical image source, an indication of a medical image of interest, and/or an indication of user preference).

The input device 310 communicates the output signals via the internet 320 (e.g. using a wired or wireless connection) to a remotely located data processing system 330 (e.g. a server).

The data processing system 330 is adapted to receive the one or more output signals from the input device 310 and to process the received signal(s) in accordance with a transfer identification algorithm in order to infer/determine a transfer function to employ, based on a selected location in an anatomical atlas provided to a user of the input device 310.

Further, the data processing system 330 is also adapted to communicate information representative of the identified transfer function back to the input device 310. Based on such information received from the data processing system 330, the input device 310 is adapted to apply the identified transfer function to image data of a medical image that is mapped to the selected location in the anatomical atlas. A transformed version of the medical image is then displayed by the input device 310 based on the transformed image data. In this way, a user of the input device 310 be presented with a medical image that is displayed with preferred or optimal visualisation parameters.

The input device 310 is adapted to output further signals representative of the user input commands/actions in response to a user assessment of the displayed (transformed) medical image data. The input device 310 is adapted to subsequently communicate the further signals via the internet 320 (or another communications network) to the data processing system 330.

The data processing system 330 is adapted to receive the further signals from the input device 310 and to process the received further signal(s) in order to infer/determine updated transformation data (if the user did not indicate acceptance of the previously displayed image, for example).

Thus, the data processing system 330 provides a centrally accessible processing resource that can receive information from the input device 310 and run one or more algorithms to automatically select a transfer function for transforming medical image data for subsequent display. Information relating to the mappings of medical images to an anatomical atlas and associated transfer functions can be stored by the data processing system (e.g. in a data store) and provided to other components of the distributed system. Such provision of transfer function or transformed medical image data may be undertaken in response to a receiving a request (e.g. via the internet 320) and/or may be undertaken without request (e.g. 'pushed').

Implementations of the system of Figure 3 may vary between: (i) a situation where the data processing system 330 communicates display-ready data, which may for example comprise display data including transformed medical image data (e.g. in JPEG or other image formats) that are simply displayed to a user of a mobile computing device 310 using a conventional image or webpage display (e.g. a web-based browser etc.); to (ii) a situation where the data processing system 330 communicates raw transfer function information that the receiving mobile computing device 310 then processes to transform medical image data for display (e.g. using local software running on the mobile computing device). Of course, in other implementations, the processing may be shared between the data processing system 330 and the mobile computing device 310 such that part of the rule or query data generated at data processing system 330 is sent to the mobile computing device 310 for further processing by local dedicated software of the mobile computing device. Embodiments may therefore employ server-side processing, client-side processing, or any combination thereof.

Further, where the data processing system 330 does not 'push' information, but rather communicates information in response to receiving a request, the user of a device making such a request may be required to confirm or authenticate their identity and/or security credentials in order for the information to be communicated.

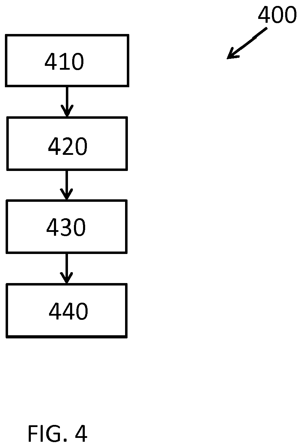

Referring now to Figure 4, there is shown a flow diagram of a method 400 for displaying a medical image according to an embodiment.

The method begins with step 410 in which transformation data is obtained (e.g. from a third party supplier, user input, remote data repository, or the like). The obtained transformation data comprises: information representative of an anatomical atlas; and a plurality of transfer functions associated with respective locations in the anatomical atlas. Thus, the obtained transformation data may be considered to be an augmented version of an anatomical atlas (since associated with locations in the anatomical atlas are transfer functions). Put another way, completion of step 410 provides transformation data (e.g. a mapping functions and transfer functions) that may be used to augment or supplement an anatomical atlas. The augmented/supplemented anatomical atlas can be used to identify a transfer function for transforming medical image data for display according to a preferred or optimised visualisation settings.

Then, in step 420, a transfer function associated with a selected location in the anatomical atlas is identified. The identified transfer function is then applied, in step 430, to image data of a medical image that is mapped to the selected location in the anatomical atlas. Completion of step 430 thus obtain transformed image data. Finally, in step 440 a transformed version of the medical image is displayed based on the transformed image data.

Thus, by way of example, the method 400 of displaying a medical image according to an embodiment may be implemented in a portable computing device (such as the smartphone or portable computer shown in Figure 3).

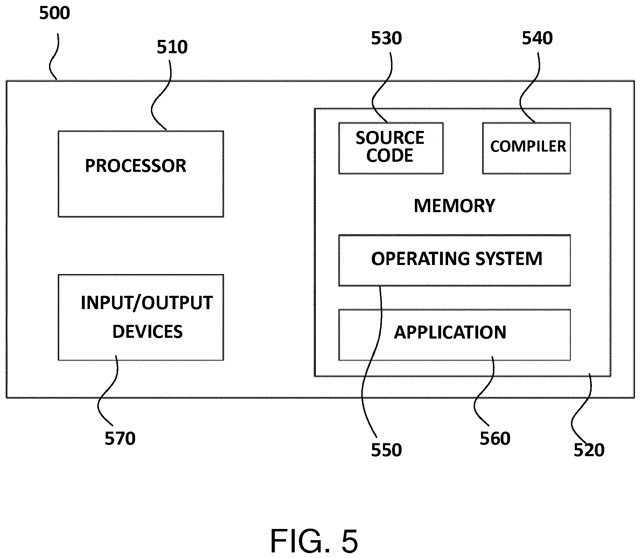

Figure 5 illustrates an example of a computer 500 within which one or more parts of an embodiment may be employed. The system can be or parts of the system can be such a computer. Various operations discussed above may utilize the capabilities of the computer 500. For example, one or more parts of a medical image display system (or display device thereof) may be incorporated in any element, module, application, and/or component discussed herein.

The computer 500 includes, but is not limited to, Personal Computers, workstations, laptops, notebooks, tablets, mobile phones, smart phones, PDAs, palm devices, servers, storages, and the like. Generally, in terms of hardware architecture, the computer 500 may include one or more processors 510, memory 520, and one or more I/O devices 570 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 510 is a hardware device for executing software that can be stored in the memory 520. The processor 510 can be virtually any custom made or commercially available processor, a central processing unit (CPU), a digital signal processor (DSP), or an auxiliary processor among several processors associated with the computer 500, and the processor 510 may be a semiconductor based microprocessor (in the form of a microchip) or a microprocessor.

The memory 520 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 520 may incorporate electronic, magnetic, optical, and/or other types of storage media. Note that the memory 520 can have a distributed architecture, where various components are situated remote from one another, but can be accessed by the processor 510.

The software in the memory 520 may include one or more separate programs, each of which comprises an ordered listing of executable instructions for implementing logical functions. The software in the memory 520 includes a suitable operating system (O/S) 550, compiler 540, source code 530, and one or more applications 560 in accordance with exemplary embodiments. As illustrated, the application 560 comprises numerous functional components for implementing the features and operations of the exemplary embodiments. The application 560 of the computer 500 may represent various applications, computational units, logic, functional units, processes, operations, virtual entities, and/or modules in accordance with exemplary embodiments, but the application 560 is not meant to be a limitation.

The operating system 550 controls the execution of other computer programs, and provides scheduling, input-output control, file and data management, memory management, and communication control and related services. It is contemplated by the inventors that the application 560 for implementing exemplary embodiments may be applicable on all commercially available operating systems.

Application 560 may be a source program, executable program (object code), script, or any other entity comprising a set of instructions to be performed. When a source program, then the program is usually translated via a compiler (such as the compiler 540), assembler, interpreter, or the like, which may or may not be included within the memory 520, so as to operate properly in connection with the O/S 550. Furthermore, the application 560 can be written as an object oriented programming language, which has classes of data and methods, or a procedure programming language, which has routines, subroutines, and/or functions, for example but not limited to, C, C++, C#, Pascal, BASIC, API calls, HTML, XHTML, XML, ASP scripts, JavaScript, FORTRAN, COBOL, Perl, Java, ADA, .NET, and the like.

The I/O devices 570 may include input devices such as, for example but not limited to, a mouse, keyboard, scanner, microphone, camera, etc. Furthermore, the I/O devices 570 may also include output devices, for example but not limited to a printer, display, etc. Finally, the I/O devices 570 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 570 also include components for communicating over various networks, such as the Internet or intranet.

If the computer 500 is a PC, workstation, intelligent device or the like, the software in the memory 520 may further include a basic input output system (BIOS) (omitted for simplicity). The BIOS is a set of essential software routines that initialize and test hardware at startup, start the O/S 550, and support the transfer of data among the hardware devices. The BIOS is stored in some type of read-only-memory, such as ROM, PROM, EPROM, EEPROM or the like, so that the BIOS can be executed when the computer 500 is activated.

When the computer 500 is in operation, the processor 510 is configured to execute software stored within the memory 520, to communicate data to and from the memory 520, and to generally control operations of the computer 500 pursuant to the software. The application 560 and the O/S 550 are read, in whole or in part, by the processor 510, perhaps buffered within the processor 510, and then executed.

When the application 560 is implemented in software it should be noted that the application 560 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 560 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

Some embodiments of the present invention may be a system, a method, and/or a computer program product. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network.

Computer readable program instructions for carrying out operations of some embodiments of the present invention may be assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk, C++ or the like, and conventional procedural programming languages, such as the "C" programming language or similar programming languages.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

While the invention has been illustrated and described in detail in the drawings and in the foregoing description, such illustration and description are to be considered illustrative and exemplary, not restrictive. The invention is not limited to the disclosed embodiments. Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A method for generating transformation data for displaying a medical image (210A), the method comprising:
mapping image data of a first medical image (210A) relating to a part of a human or animal body to a first location in an anatomical atlas (200), the anatomical atlas being representative of the relative locations of anatomical features of a human or animal body;
obtaining a first transfer function (220A) for transforming image data of the first medical image for display; and
associating the transfer function with the first location in the anatomical atlas.

2. The method of claim 1, further comprising:
mapping image data of a second medical image (210B) relating to a part of a human or animal body to a second location in the anatomical atlas;
obtaining a second transfer function (220B) for transforming image data of the second medical image for display; and
associating the second transfer function with the second location in the anatomical atlas.

3. The method of claim 2, further comprising:
determining a global transfer function for transforming image data of the first (210A) and second (220A) medical image based on the first (220A) and second (220B) transfer functions; and
associating the global transfer function with the anatomical atlas (200).

4. The method of any preceding claim, wherein mapping image data of the first medical image comprises:
identifying a first anatomical feature in the first medical image; and
determining a mapping function for mapping the image data of the first medical image to the anatomical atlas based on the identified first anatomical feature and its position in the first medical image.

5. The method of claim 4, further comprising:
identifying a second anatomical feature in the first medical image, and
wherein determining a mapping function for mapping the image data of the first medical image to the anatomical atlas is further based on the identified second anatomical feature and its position in the first medical image.

6. The method of claim 5, wherein determining the mapping function comprises interpolating based on the relative locations of the first and second anatomical features.

7. The method of any preceding claim, wherein the first transfer function is adapted to modify a visualization parameter of image data, and optionally wherein the visualization parameter comprises at least one of: a colour value; a viewing location or angle; a HU value; a contrast value; a transparency value; a brightness value; and a saturation value.

8. A method for displaying a medical image, the method comprising:
obtaining (410) transformation data comprising: an anatomical atlas representative of the relative locations of anatomical features of a human or animal body; and a plurality of transfer functions associated with respective locations in the anatomical atlas;
identifying (420) a transfer function associated with a selected location in the anatomical atlas;
applying (430) the identified transfer function to image data of a medical image that is mapped to the selected location in the anatomical atlas so as to obtain transformed image data; and
displaying (440) a transformed version of the medical image based on the transformed image data.

9. The method of claim 8, wherein the step of identifying (420) a transfer function is further based on at least one of: an indication of a medical image source; an indication of a medical image of interest; and an indication of user preference.

10. Computer program product downloadable from a communications network and/or stored on a computer readable medium and/or microprocessor-executable medium wherein the computer program product comprises computer program code instructions, which when executed by at least one processor, implement a method as claimed in any one of the method of any preceding claim.

11. A system for generating transformation data for displaying a medical image comprising at least one processor and the computer program product of claim 10.

12. The system of claim 1 l, further comprising a display device for displaying transformed image data of a medical image.

13. The system of claim 12, comprising:
a server device comprising the at least one processor; and
a client device comprising the display device,
wherein the server device is configured to generate instructions for displaying transformed image data of medical image on a display device and to transmit the generated instructions for displaying the transformed image data to the client device,
and wherein the client device is configured to receive the generated instructions for display of the transformed image data and to use the instructions to display the transformed image data.

14. Apparatus for generating transformation data for displaying a medical image (10), the apparatus comprising:
an image mapping module (120) adapted to map image data of a first medical image relating to a part of a human or animal body to a first location in an anatomical atlas, the anatomical atlas being representative of the relative locations of anatomical features of a human or animal body; and
a data processing module (130) adapted to obtain a first transfer function for transforming image data of the first medical image for display and to associate the transfer function with the first location in the anatomical atlas.

15. Apparatus for displaying a medical image, the apparatus comprising:
an input interface adapted to obtain transformation data comprising: an anatomical atlas representative of the relative locations of anatomical features of a human or animal body; and a plurality of transfer functions associated with respective locations in the anatomical atlas;
a selection module (140) adapted to identify a transfer function associated with a selected location in the anatomical atlas;
a data transformation module (150) adapted to apply the identified transfer function to image data of a medical image that is mapped to the selected location in the anatomical atlas so as to obtain transformed image data; and
a display device (160) adapted to display a transformed version of the medical image based on the transformed image data.
